# EUROPÄISCHE PATENTSCHRIFT

(11) **EP 3 199 919 B1**
(45) Veröffentlichungstag und Bekanntmachung des Hinweises auf die Patenterteilung: **31.10.2018**
(21) Anmeldenummer: 16200920.3
(22) Anmeldetag: 28.11.2016
(51) Int. Cl.: G01D 5/38, G02B 5/18

(54) **MASSVERKÖRPERUNG UND POSITIONSMESSEINRICHTUNG MIT DIESER MASSVERKÖRPERUNG**
MEASUREMENT SCALE AND POSITION MEASURING DEVICE COMPRISING THE SAME
ÉCHELLE DE MESURE ET DISPOSITIF DE MESURE DE POSITION COMPRENANT UNE TELLE ÉCHELLE DE MESURE

(30) Priorität: 26.01.2016 DE 102016201068
(43) Veröffentlichungstag der Anmeldung: 02.08.2017
(73) Patentinhaber: Dr. Johannes Heidenhain GmbH, 83301 Traunreut (DE)
(72) Erfinder: FUNK, Stefan, 83278 Traunstein (DE); SPECKBACHER, Peter, 84558 Kirchweidach (DE)

(56) Entgegenhaltungen:
- EP-A1- 0 773 458
- EP-A2- 0 160 784
- DE-A1- 3 518 774
- DE-A1- 10 236 788

## Beschreibung

### BEZEICHNUNG DER ERFINDUNG

Maßverkörperung und Positionsmesseinrichtung mit dieser Maßverkörperung

### GEBIET DER TECHNIK

Die vorliegende Erfindung betrifft eine Maßverkörperung für eine optische Positionsmesseinrichtung, sowie eine Positionsmesseinrichtung mit dieser Maßverkörperung. In einer Positionsmesseinrichtung werden solche Maßverkörperungen von einem Abtastkopf mittels Licht abgetastet, um eine Verschiebung zwischen der Maßverkörperung und dem Abtastkopf zu erfassen.

### STAND DER TECHNIK

Aus der DE 10236788 A1 ist eine Maßverkörperung in Form eines Amplitudengitters bekannt. Dieses Amplitudengitter umfasst ein Substrat, auf dem eine Spiegelschicht angeordnet ist. Auf diese Spiegelschicht folgt eine transparente Abstandsschicht, auf der wiederum eine teiltransparente Schicht abgeschieden ist. Diese teiltransparente Schicht ist durch teilweises Entfernen strukturiert. Auf diese teiltransparente Schicht einfallendes Licht wird teilweise reflektiert und transmittiert. Das reflektierte Licht wird durch eine destruktive Interferenz mit dem transmittierten, von der unteren Spiegelschicht zurückreflektierten Licht ausgelöscht, so dass die Maßverkörperung hier dunkel erscheint, während in Bereichen, in denen die teiltransparente Schicht fehlt, die Maßverkörperung hell erscheint.

Die transparente Abstandschicht muss hierfür (unter der vereinfachenden Annahme eines Phasensprungs von genau π an den Grenzflächen Luft - teiltransparente Schicht, Luft - Abstandsschicht sowie Abstandsschicht - Spiegelschicht und vernachlässigbarer Absorption) einen Phasenhub von π erzeugen, also (bei senkrechtem Lichteinfall) eine Dicke aufweisen, die multipliziert mit dem Brechungsindex der Abstandsschicht dem vierten Teil der Wellenlänge des zur Abtastung verwendeten Lichtes entspricht. Allerdings wird auch in den hellen Bereichen das Licht zu einem gewissen Teil an der Grenzfläche von der Luft zur Abstandsschicht reflektiert, so dass dieses reflektierte Licht ebenfalls destruktiv mit dem an der Spiegelschicht reflektierten Licht interferiert. Die hellen Bereiche erscheinen dadurch weniger hell, der Hell-Dunkel-Kontrast des Amplitudengitters wird reduziert. Hinzu kommt, dass die teiltransparente Schicht bevorzugt aus einer sehr dünnen (wenige Nanometer) Metallschicht besteht, die sowohl chemischen als auch mechanischen Einflüssen ausgesetzt ist und daher unter Umständen beschädigt werden oder sich in ihren optischen Eigenschaften verändern kann.

### ZUSAMMENFASSUNG DER ERFINDUNG

Aufgabe der Erfindung ist es, die aus dem Stand der Technik bekannte Maßverkörperung bzw. eine damit ausgestattete Positionsmesseinrichtung hinsichtlich der optischen Eigenschaften und der Stabilität gegenüber Umwelteinflüssen weiter zu verbessern.

Diese Aufgabe wird gelöst durch eine Maßverkörperung gemäß Anspruch 1 bzw. durch eine Positionsmesseinrichtung gemäß Anspruch 7. Vorteilhafte Details ergeben sich auch aus den abhängigen Ansprüchen.

Es wird eine Maßverkörperung für eine Positionsmesseinrichtung mit optischer Abtastung beschrieben, mit einem Träger, auf dem eine Spiegelschicht angeordnet ist, gefolgt von einer transparenten Abstandsschicht, auf der eine beispielsweise zu einem Gitter strukturierte, teiltransparente Schicht angeordnet ist. Die teiltransparente Schicht definiert ein Hell-Dunkel-Muster, wobei Bereiche mit der teiltransparenten Schicht dunkel und Bereiche ohne die teiltransparente Schicht hell erscheinen. Auf der strukturierten, teiltransparenten Schicht ist eine Versiegelungsschicht angeordnet. Dabei gilt, dass die optischen Weglängen (also die Produkte aus dem Brechungsindex und der Schichtdicke) für die Abstandsschicht und die Versiegelungsschicht jeweils näherungsweise gleich sind oder sich um ein ungeradzahliges Vielfaches unterscheiden.

In einer besonders bevorzugten Ausführungsform besteht sowohl die Abstandsschicht als auch die Versiegelungsschicht aus dem gleichen Material, nämlich Siliziumdioxid. Die beiden Schichten weisen daher den gleichen Brechungsindex auf. Beide Schichten können mit der gleichen Schichtdicke abgeschieden werden.

In der erfindungsgemäßen Positionsmesseinrichtung wird so eine Maßverkörperung von einem Abtastkopf mit monochromatischem Licht abgetastet. Ein im hellen Bereich der Maßverkörperung an der Spiegelschicht reflektierter, vom Abtastkopf ausgesendeter Lichtstrahl erfährt beim zweifachen Durchqueren der Abstandsschicht und der Versiegelungsschicht eine Phasenverschiebung um 2π oder um ein ganzzahliges Vielfaches davon, verglichen mit einem Lichtstrahl, der unmittelbar an einer Grenzfläche der Versiegelungsschicht reflektiert wird. Diese Lichtstrahlen interferieren daher nicht mehr wie im Stand der Technik destruktiv, die Helligkeit des hellen Bereiches wird nicht mehr reduziert, der Hell-Dunkel-Kontrast ist größer und die Auswertung der Signale im Abtastkopf einfacher und genauer.

Die Maßverkörperung ist dank der zusätzlichen Versiegelungsschicht außerdem unempfindlicher gegenüber Umwelteinflüssen und fertigungsbedingten Schwankungen der Schichtdicke der teiltransparenten Schicht.

Weitere Vorteile und Einzelheiten der vorliegenden Erfindung ergeben sich aus der nachfolgenden Beschreibung verschiedener Ausführungsformen anhand der Figuren.

### KURZE BESCHREIBUNG DER ZEICHNUNGEN

Dabei zeigt
- Figur 1: eine Maßverkörperung gemäß dem Stand der Technik,
- Figur 2: eine Maßverkörperung gemäß der Erfindung.

### BESCHREIBUNG DER AUSFÜHRUNGSFORMEN

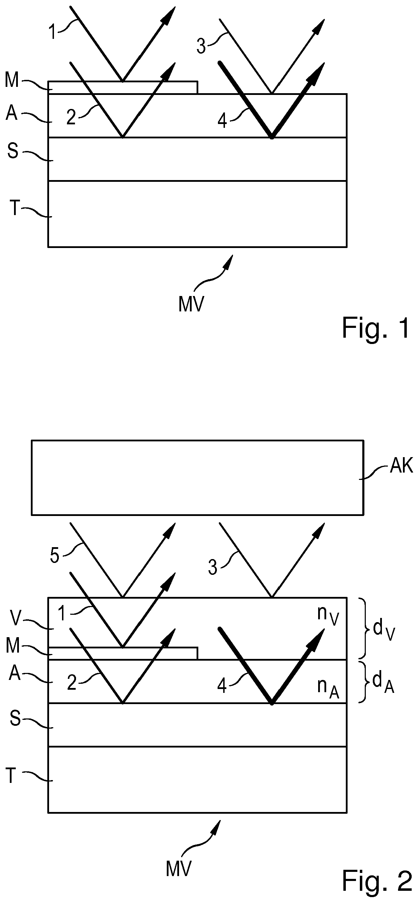

Die Figur 1 zeigt den eingangs erwähnten Stand der Technik. Die Maßverkörperung MV ist auf einem Träger T aufgebaut, der beispielsweise aus einem Material mit einem besonders kleinen thermischen Ausdehnungskoeffizient besteht, etwa aus einer unter dem Markennamen Zerodur erhältlichen Glaskeramik. Andere Materialien wie Quarzglas, Float-Glas oder auch Stahl eignen sich ebenfalls für den Träger T. Auf dem Träger T abgeschieden ist eine Spiegelschicht S, die beispielsweise eine aufgedampfte Aluminiumschicht oder auch Goldschicht sein kann. Es folgt eine Abstandsschicht A, bei der es sich um eine SiO2 - Schicht mit einem Brechungsindex von n = 1,48 handeln kann. In den dunklen Bereichen der als Amplitudengitter ausgebildeten Maßverkörperung MV folgt sodann eine teiltransparente Schicht M, die als wenige Nanometer dicke Chromschicht ausgebildet sein kann. Auch Silizium wäre ein geeignetes Material für eine teiltransparente Schicht. Diese teiltransparente Schicht M wird bei der Herstellung der Maßverkörperung MV zunächst ganzflächig abgeschieden und anschließend in den hellen Bereichen entfernt. Hierzu eignen sich Lithographie-Prozesse mit anschließendem Ätzschritt.

Anhand der schematisch eingezeichneten Lichtstrahlen 1 - 4 soll das Zustandekommen des Hell-Dunkel-Musters dieser Maßverkörperung MV erklärt werden. In dem auf der linken Seite der Figur 1 dargestellten dunklen Bereich der Maßverkörperung MV wird Licht sowohl an der teiltransparenten Schicht M als auch an der Spiegelschicht S reflektiert. Dies ist schematisch durch die beiden Lichtstrahlen 1 und 2 dargestellt. Die Materialien und Schichtdicken sind so gewählt, dass die Amplituden der beiden reflektierten Strahlen 1 und 2, die die Maßverkörperung MV wieder verlassen, idealerweise gleich sind, und dass die beiden Strahlen 1 und 2 idealerweise einen Phasenversatz von π aufweisen. Dann führt eine destruktive Interferenz zwischen beiden Strahlen 1 und 2 zu deren Auslöschung und damit zu einem dunklen Bereich der Maßverkörperung MV. Die Gleichheit der Amplituden wird durch die Schichtdicke und den Brechungsindex der teiltransparenten Schicht eingestellt. Den Phasenversatz von π erhält man im Wesentlichen durch eine geeignete Wahl der Dicke der Abstandsschicht A, die in etwa dem vierten Teil der zur Abtastung der Maßverkörperung MV verwendeten Wellenlänge entsprechen sollte, geteilt durch den Brechungsindex der Abstandsschicht A. Dabei wird wieder vereinfachend vorausgesetzt, dass an den Grenzflächen Luft - teiltransparente Schicht, Luft - Abstandsschicht sowie Abstandsschicht - Spiegelschicht ein Phasensprung von genau π auftritt und die Absorption vernachlässigbar ist. Da destruktive Interferenz auch für ungeradzahlige Vielfache von π auftritt, können außerdem auch entsprechend dickere Abstandschichten A verwendet werden.

Im auf der rechten Seite der Figur 1 dargestellten hellen Bereich der Maßverkörperung MV wird der allergrößte Teil des Lichtes an der Spiegelschicht S reflektiert, schematisch durch den Lichtstrahl 4 dargestellt. Nur ein kleinerer, schematisch mit Lichtstrahl 3 dargestellter Teil wird unmittelbar an der Abstandsschicht A reflektiert. Insgesamt wird dieser Bereich also hell erscheinen.

Nachteil eines solchen Schichtaufbaus ist, dass zur Erzielung einer im optischen Bereich teiltransparenten metallischen Schicht M deren Filmdicke nur wenige Nanometer betragen darf und diese für einen hohen Kontrast möglichst genau getroffen werden sollte. Zugleich sollte der Imaginärteil des Brechungsindexes des gewählten Metalls nicht zu hoch sein, um die Absorption der teiltransparenten Schicht M möglichst gering zu halten.

Chrom ist hierzu zwar aufgrund des niedrigen Brechungsindex prinzipiell gut geeignet, bildet aber transparente Oxide CrₓO_{y}. Dies bedeutet, dass sich die tatsächliche Schichtdicke der teiltransparenten Schicht M durch chemische Reaktionen während der Fertigungs- und Reinigungsprozesse oder durch sonstige Umwelteinflüsse ändern kann. Hierdurch verändert sich aber zugleich der Hell-Dunkel-Kontrast, da die Filmdicke nicht mehr die optimale Teiltransparenz aufweist. Die weitgehend vollständige Auslöschung der Lichtstrahlen 1 und 2 ist dann nicht mehr gewährleistet, der dunkle Bereich erscheint etwas heller.

Ein zusätzliches Problem ist, dass im hellen Bereich die Reflexion des Lichtstrahls 3 an der Grenzfläche zur Abstandsschicht A destruktiv mit der Reflexion des Lichtstrahls 4 an der Spiegelschicht S interferiert. Auch wenn es wegen der deutlich unterschiedlichen Amplituden bei weitem keine vollständige Auslöschung der Lichtstrahlen 3 und 4 gibt, so wird doch der Hell-Dunkel-Kontrast der Maßverkörperung MV insgesamt herabgesetzt.

Mit der in Figur 2 dargestellten Verbesserung der Maßverkörperung MV können sowohl die geschilderten Probleme der dunklen als auch der hellen Bereiche gelöst werden, und somit eine beständigere, hinsichtlich des Hell-Dunkel-Kontrastes optimierte Maßverkörperung MV geschaffen werden.

Schematisch dargestellt ist in der Figur 2 außerdem ein Abtastkopf AK, der Licht zur Abtastung der Maßverkörperung MV aussendet und wieder empfängt. Photodetektoren im Abtastkopf AK erzeugen elektrische Signale, aus denen in bekannter Weise Positionswerte abgeleitet werden können.

Die Verbesserung besteht in einer zusätzlichen Versiegelungsschicht V, die einerseits für einen Schutz der teiltransparenten Schicht M sorgt, und bei geeigneter optischer Auslegung auch für eine größere Helligkeit in den hellen Bereichen und damit insgesamt für einen verbesserten Hell-Dunkel-Kontrast sorgt.

Die Versiegelungsschicht V kann aus dem gleichen Material bestehen wie die Abstandsschicht A, also z.B. aus gesputtertem SiO₂, aber auch aus anderen Materialien, wie nasschemisch aufzutragende Chemikalien wie Spin-on-Glass oder Fotolacke (z.B. unter den Handelsnamen Cyclotene, HSQ oder SU-8 erhältliche Lacke).

Entscheidend ist, dass die Versiegelungsschicht V die gleiche Phasenverschiebung um π (oder ein ungeradzahliges Vielfaches von π) bewirkt wie die Abstandsschicht A. Hierzu muss das Produkt aus der Schichtdicke d_{A}, dv und dem Brechungsindex n_{A}, n_{V} der jeweiligen Schicht A, V gleich sein oder sich um ein ungeradzahliges Vielfaches unterscheiden. Dann hat nämlich der Lichtstrahl 4 gegenüber dem Lichtstrahl 3 einen Phasenversatz von 2π (oder ein anderes geradzahliges Vielfaches von π) und interferiert konstruktiv mit dem Lichtstrahl 3 - die leichte Reduktion der Helligkeit wie im Stand der Technik entfällt, der Hell-Dunkel-Kontrast steigt.

Bildet man die Abstandsschicht A und die Versiegelungsschicht V aus Material mit identischem Brechungsindex, insbesondere aus dem gleichen Material, so sind die Dicken d_{A}, d_{V} der beiden Schichten bevorzugt identisch. Wieder sind aber auch ungeradzahlige Vielfache der einen Schichtdicke relativ zur anderen Schichtdicke möglich, solange sie nur ebenfalls zu einem zusätzlichen Phasenversatz von π, insgesamt also zu einem Versatz von 2π führen. Anders ausgedrückt müssen die Schichtdicken d_{A}, d_{V} gleich sein oder sich um einen ungeradzahligen Faktor unterscheiden.

Die Versiegelungsschicht V schützt in den dunklen Bereichen die teiltransparente Schicht M vor Umwelteinflüssen und kann z.B. einer Oxidation einer dünnen Chromschicht M und damit einer möglichen Verschlechterung des Hell-Dunkel-Kontrastes der Maßverkörperung MV vorbeugen. Zudem wird die besonders dünne teiltransparente Schicht M durch die Versiegelungsschicht V vor mechanischer Beschädigung geschützt.

Die teiltransparente Schicht M kann dank der Versiegelungsschicht V auch insgesamt etwas dicker ausfallen, was zu zusätzlicher Prozesssicherheit beiträgt. Betrachtet man nämlich den dunklen Bereich der Maßverkörperung MV in der linken Hälfte der Figur 2, so erkennt man, dass beim Verlassen der Maßverkörperung MV die Lichtstrahlen 2 und 5 einen Phasenunterschied von 2π aufweisen und sich daher konstruktiv überlagern. Zusammen müssen diese Lichtstrahlen 2 und 5 destruktiv mit dem Lichtstrahl 1 interferieren, der also eine höhere Intensität aufweisen muss als im Stand der Technik nach Figur 1. Eine höhere Intensität für Lichtstrahl 1 bedeutet aber eine stärkere Reflexion an der teiltransparenten Schicht M und damit eine größere Schichtdicke für diese Schicht M. Theoretische Berechnungen und Experimente mit Licht der Wellenlänge 455 nm, einer Abstandsschicht A und einer Versiegelungsschicht V jeweils aus SiO₂ (n = 1,48) mit einer Dicke von ca. 65 nm haben ergeben, dass die optimale Dicke einer teiltransparenten Chromschicht M bei knapp 5 nm liegt, während das Optimum gemäß dem Stand der Technik (also ohne Versiegelungsschicht V) bei ca. 2,5 nm liegt. Das Prozessfenster für die Schichtdicke der teiltransparenten Schicht M (also die erlaubte Schichtdickenvariation der Schicht M bei einer Maximalreflexion von 0,1 im dunklen Bereich) wird dank der Versiegelungsschicht V Berechnungen zufolge zudem ungefähr um einen Faktor zwei breiter.

Diese Berechnungen und Experimente ergaben außerdem eine Verbesserung des Hell-Dunkel-Kontrastes (also der Reflexion des Bereichs ohne Schicht M minus der Reflexion des Bereichs mit Schicht M) von 0,7 auf 0,8 bei Anwendung der optimierten Versiegelungsschicht V.

Die verschiedenen Schichtdicken sollten wie beschrieben auf die Wellenlänge des zur Abtastung der Maßverkörperung MV verwendeten Lichtes optimiert werden. Dabei stellt man z.B. durch Berechnungen fest, dass sich bei Abweichungen der Wellenlänge des Lichtes von der zur Optimierung verwendeten Wellenlänge dank der Versiegelungsschicht erweiterte Wellenlängenbereiche ergeben, für die ausreichend gute Kontraste erzielbar sind. Somit führt die Erfindung auch zu breiter anwendbaren Maßverkörperungen, die sich für den Einsatz mit Licht verschiedener Wellenlängen bzw. mit verschiedenen Abtastköpfen AK eignet.

## Patentansprüche

1. Maßverkörperung für eine Positionsmesseinrichtung mit optischer Abtastung, mit einem Träger (T), auf dem eine Spiegelschicht (S) angeordnet ist, gefolgt von einer transparenten Abstandsschicht (A), auf der eine strukturierte, teiltransparente Schicht (M) angeordnet ist, die ein Hell-Dunkel-Muster definiert, wobei Bereiche mit der teiltransparenten Schicht (M) dunkel und Bereiche ohne die teiltransparente Schicht (M) hell erscheinen, **dadurch gekennzeichnet, dass** auf den hell und dunkel erscheinenden Bereichen der strukturierten, teiltransparenten Schicht (M) eine Versiegelungsschicht (V) angeordnet ist, wobei Produkte aus dem Brechungsindex (n_{A}, n_{V}) und der Schichtdicke (d_{A}, d_{V}) für die Abstandsschicht (A) und die Versiegelungsschicht (V) gleich sind oder sich um ein ungeradzahliges Vielfaches unterscheiden.

2. Maßverkörperung nach Anspruch 1, **dadurch gekennzeichnet, dass** die Abstandsschicht (A) und die Versiegelungsschicht (V) den gleichen Brechungsindex (n_{A}, n_{V}) aufweisen.

3. Maßverkörperung nach Anspruch 2, **dadurch gekennzeichnet, dass** die Abstandsschicht (A) und die Versiegelungsschicht (V) aus dem gleichen Material bestehen.

4. Maßverkörperung nach Anspruch 2 oder 3, **dadurch gekennzeichnet, dass** die Abstandsschicht (A) und die Versiegelungsschicht (V) die gleiche Dicke (d_{A}, d_{V}) aufweisen.

5. Maßverkörperung nach einem der vorhergehenden Ansprüche, **dadurch gekennzeichnet, dass** die Abstandsschicht (A) und die Versiegelungsschicht (V) aus Siliziumdioxid bestehen.

6. Maßverkörperung nach einem der vorhergehenden Ansprüche, **dadurch gekennzeichnet, dass** die teiltransparente Schicht (M) aus einer Chromschicht besteht, die vorzugsweise dünner als 10 nm ist.

7. Positionsmesseinrichtung mit einer Maßverkörperung nach einem der vorhergehenden Ansprüche, sowie mit einem Abtastkopf (AK) zur Abtastung der Maßverkörperung (MV) mit monochromatischem Licht, bei dem ein im hellen Bereich der Maßverkörperung (MV) an der Spiegelschicht (S) reflektierter, vom Abtastkopf (AK) ausgesendeter Lichtstrahl (4) beim zweifachen Durchqueren der Abstandsschicht (A) und der Versiegelungsschicht (V) eine Phasenverschiebung um 2π oder ein ganzzahliges Vielfaches davon erfährt, verglichen mit einem Lichtstrahl (3), der unmittelbar an einer Grenzfläche der Versiegelungsschicht (V) reflektiert wird.

8. Positionsmesseinrichtung nach Anspruch 7, **dadurch gekennzeichnet, dass** die Dicke (d_{V}) der Versiegelungsschicht (V) dem vierten Teil der Wellenlänge des vom Abtastkopf verwendeten Lichtes, geteilt durch den Brechungsindex (n_{V}) der Versiegelungsschicht (V) entspricht, oder einem ungeradzahligen Vielfachen dieser Dicke.

9. Positionsmesseinrichtung nach Anspruch 7 oder 8, **dadurch gekennzeichnet, dass** die Dicke (d_{A}) der Abstandsschicht (A) dem vierten Teil der Wellenlänge des vom Abtastkopf verwendeten Lichtes, geteilt durch den Brechungsindex (n_{A}) der Abstandsschicht (A), oder einem ungeradzahligen Vielfachen dieser Dicke.

## Claims

1. Material measure for a position measuring device with optical scanning, comprising a carrier (T), on which a mirror layer (S) is arranged, followed by a transparent spacer layer (A), on which a structured, partly transparent layer (M) is arranged, which defines a bright-dark pattern, wherein regions with the partly transparent layer (M) appear dark and regions without the partly transparent layer (M) appear bright, **characterized in that** a sealing layer (V) is arranged on the regions of the structured, partly transparent layer (M) that appear bright and dark, wherein products of the refractive index (n_{A}, n_{V}) and the layer thickness (d_{A}, d_{V}) for the spacer layer (A) and the sealing layer (V) are identical or differ by an odd-numbered multiple.

2. Material measure according to Claim 1, **characterized in that** the spacer layer (A) and the sealing layer (V) have the same refractive index (n_{A}, n_{V}).

3. Material measure according to Claim 2, **characterized in that** the spacer layer (A) and the sealing layer (V) consist of the same material.

4. Material measure according to Claim 2 or 3, **characterized in that** the spacer layer (A) and the sealing layer (V) have the same thickness (d_{A}, d_{V}).

5. Material measure according to any of the preceding claims, **characterized in that** the spacer layer (A) and the sealing layer (V) consist of silicon dioxide.

6. Material measure according to any of the preceding claims, **characterized in that** the partly transparent layer (M) consists of a chromium layer, which is preferably thinner than 10 nm.

7. Position measuring device comprising a material measure according to any of the preceding claims, and comprising a scanning head (AK) for scanning the material measure (MV) with monochromatic light, in the case of which a light beam (4) emitted by the scanning head (AK) and reflected at the mirror layer (S) in the bright region of the material measure (MV), upon passing through the spacer layer (A) and the sealing layer (V) twice, experiences a phase shift by 2*π* or an integral multiple thereof, compared with a light beam (3) that is reflected directly at an interface of the sealing layer (V).

8. Position measuring device according to Claim 7, **characterized in that** the thickness (d_{V}) of the sealing layer (V) corresponds to one quarter of the wavelength of the light used by the scanning head, divided by the refractive index (n_{V}) of the sealing layer (V), or to an odd-numbered multiple of this thickness.

9. Position measuring device according to Claim 7 or 8, **characterized in that** the thickness (d_{A}) of the spacer layer (A) to one quarter of the wavelength of the light used by the scanning head, divided by the refractive index (n_{A}) of the spacer layer (A), or to an odd-numbered multiple of this thickness.

## Revendications

1. Échelle de mesure destinée à un dispositif de mesure de position à balayage optique, comportant un support (T) sur lequel est disposée une couche miroir (S), suivie d'une couche d'espacement transparente (A) sur laquelle est disposée une couche structurée partiellement transparente (M), qui définit un motif clair-obscur, dans laquelle des zones comportant la couche partiellement transparente (M) paraissent sombres et des zones dépourvues de la couche partiellement transparente (M) paraissent claires, **caractérisée en ce qu'**une couche de scellement (V) est disposée sur les zones de la couche structurée partiellement transparente (M) qui paraissent claires et sombres, dans lequel des produits de l'indice de réfraction (n_{A}, n_{V}) par l'épaisseur de couche (d_{A}, d_{V}) pour la couche d'espacement (A) et la couche de scellement (V) sont identiques ou diffèrent d'un multiple impair.

2. Échelle de mesure selon la revendication 1, **caractérisée en ce que** la couche d'espacement (A) et la couche de scellement (V) présentent le même indice de réfraction (n_{A}, n_{V}).

3. Échelle de mesure selon la revendication 2, **caractérisée en ce que** la couche d'espacement (A) et la couche de scellement (V) sont constituées du même matériau.

4. Échelle de mesure selon la revendication 2 ou 3, **caractérisée en ce que** la couche d'espacement (A) et la couche de scellement (V) présentent la même épaisseur (d_{A}, d_{V}).

5. Échelle de mesure selon l'une des revendications précédentes, **caractérisée en ce que** la couche d'espacement (A) et la couche de scellement (V) sont constituées de dioxyde de silicium.

6. Échelle de mesure selon l'une des revendications précédentes, **caractérisée en ce que** la couche partiellement transparente (M) est constituée d'une couche de chrome qui est de préférence plus mince que 10 nm.

7. Dispositif de mesure de position comportant un échelle de mesure selon l'une des revendications précédentes et une tête de balayage (AK) destinée à balayer l'échelle de mesure (MV) avec une lumière monochromatique, dans lequel un faisceau lumineux (4) réfléchi dans la zone claire de l'échelle de mesure (MV) sur la couche miroir (S) et émis par la tête de balayage (AK) subit un déphasage de 2n ou d'un multiple entier de celui-ci lorsque la couche d'espacement (A) et la couche de scellement (V) sont parcourues deux fois, par comparaison à un faisceau lumineux (3) qui est directement réfléchi au niveau d'une interface de la couche de scellement (V).

8. Dispositif de mesure de position selon la revendication 7, **caractérisé en ce que** l'épaisseur (d_{V}) de la couche de scellement (V) correspond à un quart de la longueur d'onde de la lumière utilisée par la tête de balayage, divisée par l'indice de réfraction (n_{V}) de la couche de scellement (V), ou par un multiple impair de ladite épaisseur.

9. Dispositif de mesure de position selon la revendication 7 ou 8, **caractérisé en ce que** l'épaisseur (d_{A}) de la couche d'espacement (A) le quart de la longueur d'onde de la lumière utilisée par la tête de balayage, divisée par l'indice de réfraction (n_{A}) de la couche d'espacement (A) ou par un multiple impair de ladite épaisseur.
